# EUROPÄISCHE PATENTSCHRIFT

(11) **EP 1 103 426 B1**
(45) Veröffentlichungstag und Bekanntmachung des Hinweises auf die Patenterteilung: **18.02.2009**
(21) Anmeldenummer: 00124414.4
(22) Anmeldetag: 08.11.2000
(51) Int. Cl.: B60R 16/02, H02J 7/34

(54) **Verfahren zur Leistungsverteilung**
Method for load management
Procédé de gestion de puissance

(30) Priorität: 26.11.1999 DE 19956935
(43) Veröffentlichungstag der Anmeldung: 30.05.2001
(73) Patentinhaber: ROBERT BOSCH GMBH, 70442 Stuttgart (DE)
(72) Erfinder: Mohr, Torsten, 71229 Leonberg (DE)

(56) Entgegenhaltungen:
- DE-A- 19 618 882
- US-A- 5 779 817
- US-A- 5 848 366
- US-A- 5 886 419

## Beschreibung

Die Erfindung betrifft ein Verfahren zur Leistungsverteilung, insbesonders zur Verteilung der in einem Kraftfahrzeugbordnetz zur Verfügung stehenden Leistung nach der Gattung des Hauptanspruchs.

### Stand der Technik

Die Verteilung der zur Verfügung stehenden Leistung, insbesonders der in einem Kraftfahrzeugbordnetz zur Verfügung stehenden elektrischen Leistung stellt heute in zunehmendem Maß ein Problem dar, da die Zahl und die Leistungsaufnahme der elektrischen Verbraucher im Fahrzeugbordnetz ständig anwächst. Gleichzeitig kann die zur Verfügung stehenden elektrischen Leistung, die mit Hilfe eines vom Motor des Fahrzeugs angetriebenen Generators erzeugt wird, nicht beliebig gesteigert werden, da sowohl hinsichtlich der Größen des Generators als auch hinsichtlich seiner Auswirkungen auf den ihn antreibenden Motor bestimmte Vorgaben eingehalten werden müssen. Damit eine zuverlässige Versorgung der elektrischen Verbraucher ermöglicht wird, werden verschiedene Maßnahmen getroffen, die entweder zu einer Leistungssteigerung, der vom Generator abgegebenen elektrischen Energie führen oder die sicherstellen, daß bei einer kritischen Versorgungslage die nicht

sicherheitsrelevanten elektrischen Verbraucher zumindest zeitweise abgeschaltet haben, so daß dann eine Herabsetzung der benötigten elektrischen Leistung erreicht wird.

Ein Verfahren zur Leistungsverteilung in einem Kraftfahrzeugbordnetz, das die zur Verfügung stehenden elektrischen Leistung so verteilt, daß zumindest die sicherheitsrelevanten Verbraucher zuverlässig versorgt werden und gleichzeitig eine Mindesthöhe der Bordnetzspannung gewährleistet wird, ist aus der DE-OS 197 458 49 bekannt. Dabei wird die Verteilung der Leistung mit Hilfe eines Bordnetz-Managers durchgeführt. Dieser Bordnetz-Manager ist im wesentlichen ein Steuergerät mit integriertem Mikroprozessor, dem die benötigten Informationen zugeführt werden, aus denen die Steuereinheit dann eine Verteilungsstrategie ableitet, die eine optimierte Leistungsverteilung ermöglicht. Bei dem bekannten Verfahren zur Leistungsverteilung wird dabei sowohl auf das Bordnetz als auch auf den Motor eingegriffen. So werden beispielsweise vorgebbare weniger relevante Verbraucher zumindest zeitweise von der Leistungsversorgung weggeschaltet und es wird gegebenenfalls auf die Motordrehzahl eingegriffen, wodurch sich auch die Generatordrehzahl verändern läßt und somit unter Umständen mehr elektrische Leistung bereit gestellt werden kann.

Aus der DE 196 18 882 A1 sind Schaltungsanordnungen zur Stromversorgung mindestens eines elektrischen Verbrauchers mittels eines Solargenerators bekannt, bei denen zwischen dem Solargenerator und dem mindestens einen Verbraucher ein Gleichspannungswandler angeordnet ist, der dazu dient, eine Impedanzanpassung vorzunehmen. Damit lässt sich keine Kennlinienanpassung zwischen Solarmodul und Verbraucher erzielen, wodurch die am Solarmodul zur Verfügung stehende Leistung besser ausgenutzt werden kann. Diese Optimierung wird durch eine Regelung der Solargeneratorspannung bewirkt, die unter Einsatz des vorhandenen Gleichspannungswandlers mit Impedanzanpassung arbeitet.

### Aufgabe der Erfindung

Die Aufgabe der Erfindung besteht darin in einem Fahrzeugbordnetz eine ausgeglichene Ladebilanz für die Batterie zu ermöglichen. Dazu soll ein optimiertes Verfahren zur Verteilung der zur Verfügung stehenden elektrischen Leistungen angegeben werden, das nach einer koordinierten Strategie der Verbraucher an- und abschaltet und so sicherstellt, daß für die Batterie genügend elektrische Leistung übrigbleibt. Gelöst wird diese Aufgabe durch eine Verfahren zur Leistungsverteilung mit den Merkmalen des Anspruches 1.

### Vorteile der Erfindungen

Das erfindungsgemäße Verfahren zur Leistungsverteilung hat den Vorteil, daß eine flexible Leistungsverteilung auch beim Einsatz von Verbrauchern mit stark schwankendem Leistungsbedarf gewährleistet wird, daß eine ausgeglichene Ladebilanz für die Batterie sichergestellt wird und daß die Möglichkeit der Optimierung auf verschiedene Gütekriterien besteht, die es ermöglicht, die Leistungsverteilung abhängig von einem vorgebbaren Optimierungsprinzip anzupassen. Erzielt werden diese Vorteile durch ein Verfahren zur Leistungsverteilung mit den Merkmalen des Anspruches 1.

Dieses Verfahren, das sich besonders vorteilhaft zur Verteilung der in einem Kraftfahrzeugbordnetz zur Verfügung stehenden elektrisch Leistung an die verschiedenen Verbraucher einsetzen läßt, verlangt, daß vorgebbaren Komponenten des Bordnetzes jeweils eine Kennlinie zugeordnet wird, in der eine normierte Bewertungszahl in Abhängigkeit von der Leistung enthalten ist und die momentane Verteilung der Leistung abhängig von den Kennlinien nach einem vorgebbaren Optimierungsprinzip erfolgt.

Weitere Vorteile der Erfindung werden durch die in den Unteransprüchen angegebenen Maßnahmen erzielt.

### Zeichnung

Ein Ausführungsbeispiel der Erfindung ist in der Zeichnung dargestellt und wird in der nachfolgenden Beschreibung näher erläutert. Im einzelnen zeigt Figur 1 ein an sich bekanntes Fahrzeugbordnetz mit einem Steuergerät in dem das erfindungsgemäße Verfahren durchgeführt werden kann. In den Figuren 2 und 3 sind die Verläufe der Bewertungszahl über der Leistung für zwei verschiedene Komponenten des Fahrzeugbordnetzes dargestellt.

### Beschreibung

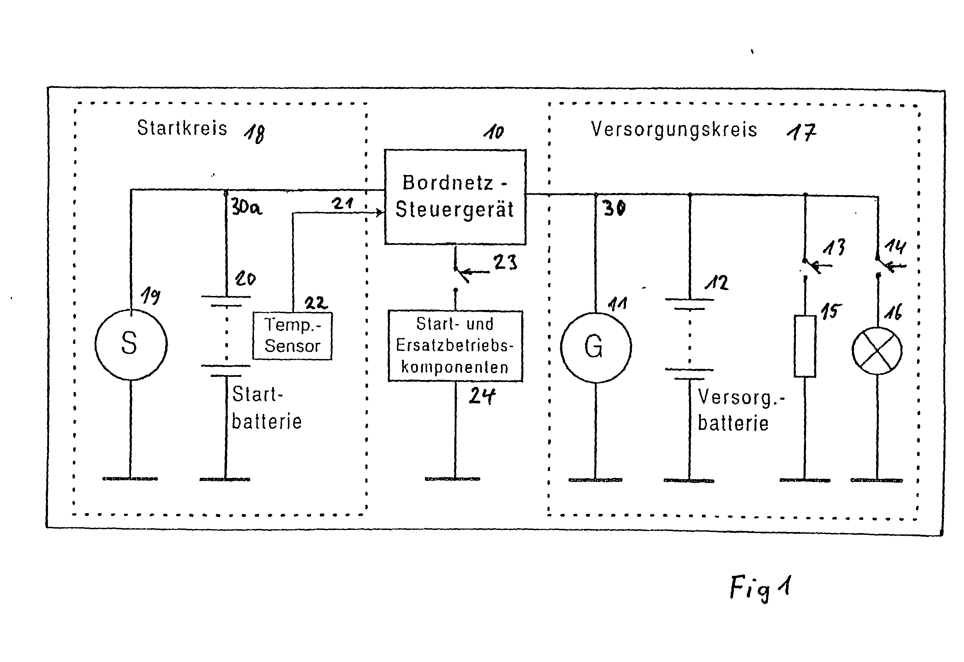

In Figur 1 ist ein Beispiel für ein Fahrzeugbordnetz dargestellt, in dem ein Bordnetzsteuergerät 10 das Verbrauchsmanagement übernimmt. Die Erfindung ist jedoch nicht auf ein derartiges Bordnetzsystem eingeschränkt, lediglich ein Steuergerät mit einem Mikroprozessor, in welchem die erfindungsgemäßen Verfahren ablaufen, ist zwingend erforderlich.

Das Fahrzeugbordnetz nach Figur 1, das beispielhaft angegeben ist, umfaßt neben dem Bordnetzsteuergerät 10 einen Generator 11, der vom Motor des Fahrzeugs angetrieben wird. Der Generator 11 liefert die gesamte elektrische Leistung für das Bordnetz. Der Generator 11 steht mit der Versorgungsbatterie über die Klemme 30 in Verbindung. Bei geschlossenen Schaltern 13 und 14 lassen sich die Verbraucher 15 und 16 des Versorgungskreises aus der Batterie oder direkt vom Generator mit elektrischer Leistung versorgen. Die Ansteuerung der Schaltmittel 13 und 14 erfolgt mit Hilfe des Bordnetzsteuergerätes, da es sich bei dieser Ansteuerung die später noch zu erläuternden Kriterien berücksichtigt. Die Schaltmittel 13 und 14 können sich bei einer anderen Verkabelung auch innerhalb des Bordnetzsteuergerätes 10 befinden.

Neben dem Versorgungskreis 17 ist ein Startkreis 18 vorhanden, der den Starter 19 und eine Starterbatterie 20 umfaßt. Sowohl der Starter 19 als auch die Starterbatterie 20 können über die Klemme 30a vom Bordnetzsteuergerät 10 aus angesteuert werden. Dem Bordnetzsteuergerät 10 werden die für die Durchführung der erfindungsgemäßen Verfahren benötigten Informationen über Leitungen 21 zugeführt. Diese Informationen können beispielsweise mit Hilfe geeigneter Sensoren 22 ermittelt werden. Über ein weiteres Schaltmittel 23, das vom Bordnetzsteuergerät betätigbar ist, können sogenannte Start- und Ersatzbetriebskomponenten 24 über das Bordnetzsteuergerät 10 mit Spannung versorgt werden. Nach welchen Kriterien die Ansteuerung der Schaltmittel erfolgt, wird anhand der erfindungsgemäßen Verfahren im folgenden näher erläutert.

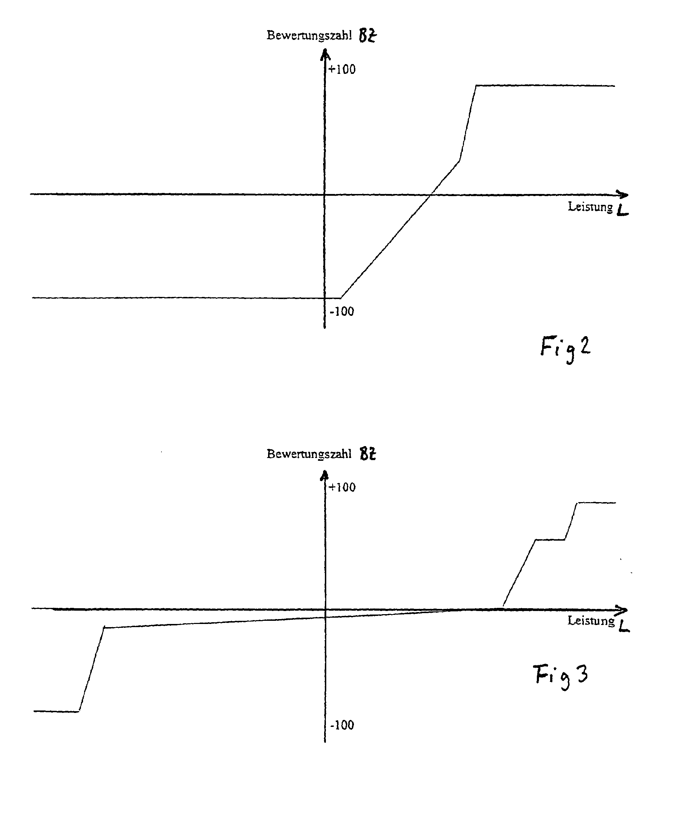

Für die aktuelle momentane Verteilung der Leistung existiert für jede aufnehmende oder abgebende Komponente eine Kennlinie. Eine solche Kennlinie läßt sich wie in den Figuren 2 und 3 angegeben, für jede Komponente aufbauen. Es sind auch Komponenten denkbar, die aufnehmen und abgeben können. Dabei wird auf der X-Achse linear die elektrische Leistung L aufgetragen, die die betreffende Komponente aufnimmt. Diese elektrische Leistung L ist vorzeichenbehaftet anzugeben. Eine negative Leistung bezeichnet dabei eine abgegebene Leistung. In dieser Darstellung wird mit jeder Koordinate auf der X-Achse ein Betriebspunkt der betreffenden Komponente beschrieben.

Auf der Y-Achse wird eine normierte Bewertungszahl BZ aufgetragen, mit der für die betreffende Komponente beschrieben wird, wie der zugehörige Betriebspunkt bewertet wird. Beispielsweise kann die Bewertungszahl BZ auf einen Bereich minus 100 bis plus 100 normiert sein. Dabei bedeutet minus 100, daß dieser Betriebspunkt eine zu geringe Leistung L darstellt und plus 100 bewertet die zugehörige Leistung L auf der X-Achse als zu hoch. Eine Bewertungszahl BZ von 0 kennzeichnet einen für diese Komponente optimalen Betriebspunkt.

Jeder Kennlinie kann zusätzlich eine Priorität zugeordnet werden, die angibt wie wichtig die Belange dieser Komponente für die Funktionsfähigkeit des Bordnetzes und damit des Fahrzeuges sind. Die Priorität kann für die Berechnung der Leistungsverteilung und eines Güte- bzw. Abweichungskriteriums verwendet werden. Die Kennlinien können und werden im allgemeinen auch im Laufe der Zeit ihre Form ändern. Dies kann beispielsweise in Abhängigkeit vom Betriebszustand der Komponente usw. geschehen. Die Bereiche, in denen die Bewertungszahl den Wert plus 100 oder minus 100 einnimmt, gilt als verbotener Bereich. Dieser Betriebspunkt darf nicht angefahren werden. Daß der Betriebspunkt nicht angefahren werden kann oder darf, kann beispielsweise den Grund haben, daß diese Leistung die Komponente zerstören würde, den Betrieb empfindlich stören würde oder daß er überhaupt nicht angefahren werden kann, da es physikalisch nicht möglich ist.

Die X-Achse ist in den positiven und negativen Bereich offen. Es ergibt sich, daß eine Kennlinie im negativen Bereich mit der Kennzahl auf der Y-Achse von minus 100 beginnt und im positiven Bereich mit der Kennzahl plus 100 endet. Eine solche Kennlinie ist sinnvoll, da eine unendlich große Leistungsabgabe zu groß ist und eine unendliche große Leistungsaufnahme nicht möglich ist.

In Figur 2 ist eine möglich Kennlinie für eine Komponente dargestellt, wobei als Komponente ein Verbraucher, beispielsweise die elektrisch heizbare Heckscheibe denkbar ist. Die Heckscheibe kann keine Leistung abgeben, deshalb liegt ihre Bewertungskennlinie im negativen Leistungsbereich (negative Bereiche X-Achse) bei dem Wert minus 100. Danach steigt ihre Bewertungszahl an und schneidet im optimalen Betriebspunkt für den Verbraucher die X-Achse. Es folgt für zunehmende Leistung ein stärkerer Anstieg der normierten Bewertungszahl bis zum Punkt maximal annehmbare Leistung. An diesem Punkt ist die normierte Bewertungszahl gleich 100. Dieser Wert wird beibehalten auch für Leistungen, die von der Heckscheibe nicht mehr aufgenommen werden kann.

In Figur 3 ist eine Kennlinie angegeben für eine Komponente, die sowohl Leistung abgeben als auch Leistung verbrauchen kann. Beispielsweise gibt diese Kennlinie für eine Batterie, insbesonders die Versorgungsbatterie. Die Kennlinie beginnt bei negativer Leistung mit der Bewertungszahl minus 100. Der gesamte negative Bereich der X-Achse stellt einen Bereich dar, in dem die Batterie Leistung aufnimmt. Mit größer werdenden X-Werten, also größer werdender Leistung schließt sich ein Bereich an, der keinen optimalen Betriebspunkt darstellt. Je mehr Leistung der Batterie zur Verfügung gestellt wird, nährt sich die Kennlinie mehr an den optimalen Bereich an. Beispielsweise ist die Batterie zu 80% geladen und kann noch Leistung aufnehmen. Bei positiven X-Werten der Kennlinie stellt sich dann ein Anstieg ein, der in eine Gerade übergeht, die einen nicht optimalen Betriebspunkt darstellt, in welchem die Batterie beispielsweise gasen würde. Die Form der Kennlinie für eine Batterie ist vom Betriebszustand bzw. vom Ladezustand der Batterie abhängig. Generell ist die Form der Kennlinien ausdrücklich vom Betriebszustand der einzelnen Komponenten abhängig. Anhand der vorgestellten Kennlinien kann für jede Komponente ein Leistungszustand gefunden werden, der ihr zur Verfügung gestellt wird. Dabei gelten folgende Zusammenhänge:

Die Summe der einzelnen Leistungen muß wieder null ergeben.

Insgesamt ist ein vorgebbares Gütekriterium zu maximieren, bzw. es ist ein Abweichungskriterium zu minimieren.

Das Abweichungskriterium kann beispielsweise aus der Summe über die Beträge der Bewertungszahlen berechnet werden.

Beispielsweise kann für jede einzelne Komponente eine Priorität mit in die Berechnung einfließen, die auch vom Betriebszustand der Komponente abhängen kann.

Fixe Leistungen für Komponenten, die beispielsweise nicht an einem Bordnetzmanagement teilnehmen oder sicherheitsrelevante Komponenten, auf die kein Einfluß genommen werden darf, können in ihrer Summe als Zusatzkennlinie mit genau einem erlaubten Betriebspunkt mit in die Berechnung einfließen, dies gilt für die Summe der Leistungen. Es ist dann beispielsweise auch möglich, die Summe der einzelnen Leistungen nicht gleich null zu setzen, sondern auf (oder gleich der Summe) die Summe der fixen Leistungen zu setzen.

Wesentlich ist, daß Leistungskennlinien definiert werden, daß ein Algorithmus vorgegeben wird, nachdem die Leistungsverteilung durchgeführt wird und daß die Güte- bzw. Abweichkriterien gefunden werden, auf die optimiert wird. Es ist dann möglich, daß eine flexible Leistungsverteilung erhalten wird, die offen ist für zukünftige Verbraucher, für Verbraucher mit stark schwankenden Leistungsbedarf und für generatorisch wirkende Verbraucher. Eine ausgeglichene Leistungsbilanz wird sichergestellt und die Möglichkeit der Optimierung auf verschiedene Gütekriterien ist möglich.

## Patentansprüche

1. Verfahren zur Verteilung der zur Verfügung stehenden Leistung in einem Kraftfahrzeugbordnetz mit einer Vielzahl von Komponenten, die wenigstens einen Generator, eine Batterie und eine Anzahl von Verbrauchern umfassen, **dadurch gekennzeichnet, dass** den Komponenten jeweils eine Kennlinie zugeordnet wird, in der eine normierte Bewertungszahl in Abhängigkeit von der Leistung enthalten ist und die momentane Verteilung der Leistung abhängig von den Kennlinien der Komponenten nach einem vorgebbaren Optimierungsprinzip erfolgt.

2. Verfahren zur Leistungsverteilung nach Anspruch 1, **dadurch gekennzeichnet, dass** die normierte Bewertungszahl in einem Bereich von beispielsweise minus 100 bis plus 100 liegt, wobei minus 100 bedeutet, dass der zugehörige Betriebspunkt eine zu geringe Leistung darstellt und plus 100 die zugehörige Leistung als zu hoch bewertet und eine Bewertungszahl von null den optimalen Betriebspunkt kennzeichnet.

3. Verfahren zur Leistungsverteilung nach Anspruch 1 oder 2, **dadurch gekennzeichnet, dass** abgegebene Leistungen als negative und aufgenommene Leistungen als positive Leistungen oder umgekehrt dargestellt werden, wobei die Bewertungszahl (BZ) bei negativer Leistung negativ und bei positiver Leistung positiv ist.

4. Verfahren zur Leistungsverteilung nach Anspruch 1, 2 oder 3, **dadurch gekennzeichnet, dass** als Optimierungskriterium eine ausgeglichene Leistungsbilanz gewählt wird.

## Claims

1. Method for distributing the available power in an on-board motor vehicle electrical system having a large number of components which comprise at least a generator, a battery and a number of loads, **characterized in that** the components each have an associated characteristic which contains a standardized evaluation number depending on the power, and the power is currently distributed as a function of the characteristics of the components in accordance with a predefinable optimization principle.

2. Method for distributing power according to Claim 1, **characterized in that** the standardized evaluation number is in a range of from, for example, minus 100 to plus 100, with minus 100 meaning that the associated operating point represents an excessively low power and plus 100 is evaluated as excessively high, and an evaluation number of zero characterizes the optimum operating point.

3. Method for distributing power according to Claim 1 or 2, **characterized in that** output powers are represented as negative powers and consumed powers are represented as positive powers, or vice versa, with the evaluation number (BZ) being negative for a negative power and positive for a positive power.

4. Method for distributing power according to Claim 1, 2 or 3, **characterized in that** a compensated power balance is selected as the optimization criterion.

## Revendications

1. Procédé de répartition de la puissance disponible dans un réseau de bord de véhicule qui présente plusieurs composants, à savoir au moins un générateur, une batterie et plusieurs consommateurs,
**caractérisé en ce que**
une ligne caractéristique qui contient un indice d'évaluation normé en fonction de la puissance est associée à chacun des composants et
**en ce que** la répartition à tout instant de la puissance est réalisée en fonction de lignes caractéristiques des composants sur base d'un principe d'optimisation prédéterminé.

2. Procédé de répartition de la puissance selon la revendication 1, **caractérisé en ce que** l'indice d'évaluation normé est situé par exemple dans la plage comprise entre au moins 100 à plus 100, moins 100 indiquant que le point de fonctionnement associé représente une puissance trop faible et plus 100 une puissance trop élevée, un indice d'évaluation de zéro caractérisant le point de fonctionnement normal.

3. Procédé de répartition de la puissance selon les revendications 1 ou 2, **caractérisé en ce que** les puissances délivrées sont représentées comme puissances négatives et les puissances absorbées comme puissances positives ou inversement, l'indice d'évaluation (BZ) étant négatif pour une puissance négative et positif pour une puissance positive.

4. Procédé de répartition de la puissance selon les revendications 1, 2 ou 3, **caractérisé en ce que** l'on sélectionne comme critère d'optimisation un bilan de puissance équilibré.
